(19) Europäisches Patentamt
European Patent Office
Office européen des brevets

(11) **EP 4 131 536 A1**

(12) **EUROPEAN PATENT APPLICATION**
published in accordance with Art. 153(4) EPC

(43) Date of publication:
**08.02.2023 Bulletin 2023/06**

(21) Application number: **21774299.8**

(22) Date of filing: **09.03.2021**

(51) International Patent Classification (IPC):
**H01M 10/052** $^{(2010.01)}$      **H01M 10/0565** $^{(2010.01)}$

(52) Cooperative Patent Classification (CPC):
**H01M 10/052; H01M 10/0565;** Y02E 60/10

(86) International application number:
**PCT/JP2021/009307**

(87) International publication number:
**WO 2021/193023 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020 JP 2020058188**

(71) Applicant: DKS Co. Ltd.
**Kyoto-shi, Kyoto 600-8873 (JP)**

(72) Inventors:
• **HOSHIHARA, Yuji**
**kyoto-shi, Kyoto 600-8873 (JP)**
• **NISHIKAWA, Akiyoshi**
**kyoto-shi, Kyoto 600-8873 (JP)**
• **HIGASHIZAKI, Tetsuya**
**kyoto-shi, Kyoto 600-8873 (JP)**
• **KAJI, Soki**
**kyoto-shi, Kyoto 600-8873 (JP)**

(74) Representative: **TBK**
**Bavariaring 4-6**
**80336 München (DE)**

(54) **LITHIUM ION SECONDARY BATTERY**

(57)    Provided is a technique with high strength, superior ionic conductivity, and superior electrical characteristics.

A lithium ion secondary battery includes a positive electrode, a negative electrode, and a polymer electrolyte. The polymer electrolyte contains a lithium salt, an ionic liquid, and a polymer. The ionic liquid contains a bis(fluorosulfonyl)imide anion as an anion component. The content of the lithium salt is 2 mol/kg or more and 6 mol/kg or less based on the sum of the content of the ionic liquid and the content of the polymer. The content of the polymer is 25% by mass or more and 40% by mass or less based on the sum of the content of the ionic liquid and the content of the polymer.

**Description**

Technical Field

The present invention relates to lithium ion secondary batteries.

Background Art

Recently, lithium ion secondary batteries, which are power devices with high energy density, have been widely used as power supplies for terminals such as notebook personal computers and cellular phones. There is a known lithium ion secondary battery in which a carbon material is used for a negative electrode and an ionic liquid having a bis(fluorosulfonyl)imide anion in which a lithium ion salt is dissolved is used for a liquid electrolyte (e.g., PTL 1). PTL 1 discloses a lithium ion secondary battery using a gel electrolyte.

Citation List

Patent Literature

PTL 1: Japanese Unexamined Patent Application Publication No. 2019-57425

Summary of Invention

Technical Problem

However, since the lithium ion secondary battery described in PTL 1 uses a gel electrolyte, there is still room for improvement because of its insufficient strength. Accordingly, it is desirable to develop another technique with high strength as well as superior ionic conductivity and superior electrical characteristics.

Solution to Problem

The present invention has been made to solve the above problem and can be implemented in the following aspects.

(1) According to one aspect of the present invention, a lithium ion secondary battery is provided. This lithium ion secondary battery includes a positive electrode, a negative electrode, and a polymer electrolyte. The polymer electrolyte contains a lithium salt, an ionic liquid, and a polymer. The ionic liquid contains a bis(fluorosulfonyl)imide anion as an anion component. The content of the lithium salt is 2 mol/kg or more and 6 mol/kg or less based on the sum of the content of the ionic liquid and the content of the polymer. The content of the polymer is 25% by mass or more and 40% by mass or less based on the sum of the content of the ionic liquid and the content of the polymer.
The lithium ion secondary battery according to this aspect has high strength because of the use of a polymer electrolyte and also has superior ionic conductivity and superior electrical characteristics.
(2) In the above lithium ion secondary battery, the content of the lithium salt may be 2 mol/kg or more and 4 mol/kg or less based on the sum of the content of the ionic liquid and the content of the polymer.
The lithium ion secondary battery according to this aspect has particularly superior specific capacity during 1C discharging.
(3) In the above lithium ion secondary battery, the polymer may contain a difunctional or higher-valent polyether acrylate.

The lithium ion secondary battery according to this aspect has particularly superior ionic conductivity and particularly superior electrical characteristics.
The present invention can be implemented in various aspects. For example, the present invention can be implemented in an aspect such as a method for manufacturing a lithium ion secondary battery.

Description of Embodiments

A. Lithium Ion Secondary Battery

A lithium ion secondary battery according to one embodiment of the present invention includes a positive electrode, a negative electrode, and a polymer electrolyte. The polymer electrolyte contains a lithium salt, an ionic liquid, and a polymer. The ionic liquid contains a bis(fluorosulfonyl)imide anion as an anion component. The content of the lithium salt is 2 mol/kg or more and 6 mol/kg or less based on the sum of the content of the ionic liquid and the content of the polymer. The content of the polymer is 25% by mass or more and 40% by mass or less based on the sum of the content of the ionic liquid and the content of the polymer.

The lithium ion secondary battery according to this embodiment has high strength because of the use of a polymer electrolyte, rather than a gel electrolyte. The lithium ion secondary battery according to this embodiment also has superior ionic conductivity and superior electrical characteristics. Although the mechanism by which this advantage is provided is not fully understood, it is probably because lithium ions move smoothly through the polymer electrolyte. In addition, the lithium ion secondary battery according to this embodiment can achieve high safety because of the use of an ionic liquid, which is nonflammable, as a solvent for a nonaqueous liquid electrolyte.

The polymer electrolyte of the lithium ion secondary battery according to this embodiment contains a polymer. The polymer may be, for example, but not particularly limited to, a suitable reactive compound selected depending on factors such as the composition and type of use (electrochemical device) of the electrolyte according to the present disclosure. Examples of polymers include acrylate compounds and oxetane compounds.

Examples of acrylate compounds include, but not particularly limited to, tetrafunctional polyether acrylates, difunctional polyether acrylates, other AO-added acrylates, and polyethylene glycol diacrylates. The polymer preferably contains a difunctional or higher-valent polyether acrylate. Here, "difunctional or higher-valent polyether acrylate" refers to a polyacrylate having two or more acryloyl groups. Examples of difunctional or higher-valent polyether acrylates include, but not particularly limited to, ELEXCEL TA-210 (manufactured by DKS Co. Ltd.).

Examples of oxetane compounds include, but not particularly limited to, methyl methacrylate-oxetanyl methacrylate copolymers. These polymers may be used alone or in a suitable combination of two or more thereof.

The nonaqueous liquid electrolyte in this embodiment is a solution of a lithium salt, serving as an electrolyte, in a solvent for transferring lithium ions. As the electrolyte in this embodiment, an ionic liquid containing a bis(fluorosulfonyl)imide anion (FSI anion) as an anion component is used. Here, an ionic liquid has the features of being liquid at room temperature (25°C), being nonvolatile, and having a relatively high decomposition temperature. The use of an ionic liquid for the liquid electrolyte forming the polymer electrolyte allows the electrolyte to have superior heat resistance and safety as compared to the use of generally flammable organic solvents (e.g., cyclic carbonates and linear carbonates). The nonaqueous liquid electrolyte in this embodiment also has high performance during high-rate charging and discharging, thus providing a battery with high energy density and high voltage. Examples of methods for preparing FSI anions include, but not particularly limited to, a method in which fluorosulfonic acid is reacted with urea. Impurities can be determined by analysis using a plasma emission spectrometer (ICP).

The anion component present in the ionic liquid may contain an anion other than an FSI anion. Examples of anions other than FSI anions include $BF_4^-$, $PF_6^-$, $SbF_6^-$, $NO_3^-$, $CF_3SO_3^-$, $(CF_3SO_2)_2N^-$ (hereinafter also referred to as "TFSI"), $(C_2F_5SO_2)_2N^-$, $(CF_3SO_2)_3C^-$, $CF_3CO_2^-$, $C_3F_7CO_2^-$, $CH_3CO_2^-$, and $(CN)_2N^-$. Two or more of the above anions other than FSI anions may also be present.

The cation used in combination with the above FSI anion in the ionic liquid present in the lithium ion secondary battery according to this embodiment is preferably, but not particularly limited to, a cation that forms an ionic liquid with a melting point of 50°C or lower. In this case, an increase in the viscosity of the nonaqueous liquid electrolyte can be reduced, and a decrease in discharge capacity can also be reduced.

For example, a compound containing an element such as N, P, S, O, C, or Si and having as its skeleton a linear structure or a cyclic structure such as a five-membered ring or a six-membered ring is used as the above cation.

Examples of cyclic structures such as five-membered rings and six-membered rings include heterocyclic structures such as furan rings, thiophene rings, pyrrole rings, pyridine rings, oxazole rings, isoxazole rings, thiazole rings, isothiazole rings, furazan rings, imidazole rings, pyrazole rings, pyrazine rings, pyrimidine rings, pyridazine rings, pyrrolidine rings, piperidine rings, benzofuran rings, isobenzofuran rings, indole rings, isoindole rings, indolizine rings, and carbazole rings.

Of these cations, nitrogen-containing linear or cyclic compounds are particularly preferred because these compounds are industrially inexpensive and are chemically and electrochemically stable.

Examples of nitrogen-containing cations include alkylammoniums such as triethylammonium, 1-ethyl-3-methylimidazolium, 1-butyl-3-methylimidazolium, 1-methyl-1-propyl-pyrrolidinium, and methylpropylpiperidinium.

As the lithium salt, which is dissolved in the above ionic liquid as a supporting electrolyte for the above nonaqueous liquid electrolyte, any lithium salt that is generally used as an electrolyte for nonaqueous liquid electrolytes can be used without particular limitation. Examples of such lithium salts include $LiPF_6$, $LiBF_4$, $LiClO_4$, $LiAsF_6$, $LiCF_3SO_3$, $LiC(CF_3SO_2)_3$, $LiN(CF_3SO_2)_2$ (LiTFSI), $LiN(FSO_2)_2$ (LiFSI), and $LiBC_4O_8$. A mixture of two or more of these lithium salts may be used. Preferred lithium salts are LiFSI and LiTFSI.

In general, such lithium salts are preferably present in the ionic liquid in a concentration of 0.1 mol/kg or more and 3.0 mol/kg or less, are more preferably present in the ionic liquid in a concentration of 0.3 mol/kg or more and 2.0 mol/kg or less, and are even more preferably present in the ionic liquid in a concentration of 0.5 mol/kg or more and 1.5 mol/kg or less.

In this embodiment, the content of the lithium salt is 2 mol/kg or more and 6 mol/kg or less based on the sum of the content of the ionic liquid and the content of the polymer. The content of the lithium salt in this embodiment is higher than the content of a lithium salt used in a common lithium ion secondary battery. If the content of the lithium salt is less than 2 mol/kg based on the sum of the content of the ionic liquid and the content of the polymer, there is a tendency that a smaller number of lithium ions can move. On the other hand, if the content of the lithium salt is more than 6 mol/kg based on the sum of the content of the ionic liquid and the content of the polymer, a sufficient number of lithium ions that can move are present; however, there is a tendency that the increase in the viscosity of the liquid electrolyte decreases the lithium ion conductivity and thus results in poor electrical characteristics. In particular, from the viewpoint of achieving superior specific capacity during 1C discharging, the content of the lithium salt is preferably 5 mol/kg or less, more preferably 4 mol/kg or less, based on the sum of the content of the ionic liquid and the content of the polymer.

In this embodiment, the content of the polymer is 25% by mass or more and 40% by mass or less based on the sum of the content of the ionic liquid and the content of the polymer. Since the content of the polymer in this embodiment falls within the above range, the polymer electrolyte can achieve high lithium ion conductivity while maintaining high strength. As a result, a separator serving as an insulating layer need not be provided between the positive electrode and the negative electrode. If the content of the polymer is less than 25% by mass based on the sum of the content of the ionic liquid and the content of the polymer, the ionic liquid cannot be retained because an electrolyte membrane with a predetermined strength is not obtained. If the content of the polymer is more than 40% by mass based on the sum of the content of the ionic liquid and the content of the polymer, the movement of lithium ions tends to be hindered, which results in a decrease in lithium ion conductivity and a decrease in electrical characteristics. Here, the electrical characteristics include charge characteristics and discharge characteristics.

The positive electrode and the negative electrode in this embodiment are each composed of an electrode active material, a conductor, a current collector, and a binder.

As the positive electrode active material used for the positive electrode in this embodiment, any material capable of intercalation and deintercalation of lithium ions can be used without particular limitation. Examples of positive electrode active materials include metal oxides, complex oxides of lithium with transition metals, metal chalcogenides, and conductive polymer compounds. Examples of metal oxides include CuO, $Cu_2O$, $MnO_2$, MoOs, $V_2O_5$, CrOs, MoOs, $Fe_2O_3$, $Ni_2O_3$, and CoOs. Examples of metal chalcogenides include $TiS_2$, $MoS_2$, and $NbSe_3$. Examples of conductive polymer compounds include polyacenes, polyparaphenylene, polypyrrole, and polyaniline.

The positive electrode active material is preferably a complex oxide of lithium with a transition metal, which tends to provide high voltage. Examples of complex oxides of lithium with transition metals include $LiCoO_2$, $LiMnO_2$, $LiMn_2O_4$, $LiNiO_2$, $LiFePO_4$, $LiNi_xCo_{(1-x)}O_2$, and $LiMn_aNi_bCo_c$ (where a + b + c = 1). Complex oxides of lithium with transition metals that are doped with small amounts of elements such as fluorine, boron, aluminum, chromium, zirconium, molybdenum, and iron and lithium complex oxide particles that have the surface thereof treated with materials such as carbon, MgO, $Al_2O_3$, and $SiO_2$ may also be used as the positive electrode active material. Two or more of the above positive electrode active materials may also be used in combination. The amount of positive electrode active material may be, for example, but not particularly limited to, 3 $mg/cm^2$ or more and 10 $mg/cm^2$ or less per unit area of the current collector.

As the negative electrode active material used for the negative electrode in this embodiment, any material capable of intercalation and deintercalation of metallic lithium or lithium ions can be used without particular limitation. Examples of negative electrode active materials include carbon materials, metal materials, lithium transition metal nitrides, crystalline metal oxides, amorphous metal oxides, silicon compounds, and conductive polymers. Examples of carbon materials include natural graphite, artificial graphite, non-graphitizable carbon, and graphitizable carbon. Examples of metal materials include metallic lithium, alloys, and tin compounds. Specific examples of negative electrode active materials include $Li_4Ti_5O_{12}$ and $NiSi_5C_6$. Two or more of the above negative electrode active materials may also be used in combination. The amount of negative electrode active material may be, for example, but not particularly limited to, 1 $mg/cm^2$ or more and 5 $mg/cm^2$ or less per unit area of the current collector.

Examples of conductors used for the positive electrode and the negative electrode in this embodiment include, but not particularly limited to, carbon black such as acetylene black and ketjen black. Instead of carbon black, conductive materials such as natural graphite (e.g., vein graphite, flake graphite, and amorphous graphite), artificial graphite, carbon whiskers, carbon fibers, metal (e.g., copper, nickel, aluminum, silver, and gold) powders, metal fibers, and conductive ceramic materials may also be used as the conductor. Two or more of the above conductors may also be used in combination. The amount of conductor added is preferably, but not particularly limited to, 1% by mass or more and 30% by mass or less, more preferably 2% by mass or more and 20% by mass or less, based on the amount of positive electrode active material or negative electrode active material.

Examples of current collectors used for the positive electrode in this embodiment include, but not particularly limited to, aluminum, titanium, stainless steel, nickel, fired carbon, conductive polymers, and conductive glass. To improve the adhesion, the conductivity, and the oxidation resistance, materials such as aluminum and copper that have the surface thereof treated with materials such as carbon, nickel, titanium, and silver may also be used as the current collector for the positive electrode.

Examples of current collectors used for the negative electrode in this embodiment include, but not particularly limited to, copper, stainless steel, nickel, aluminum, titanium, fired carbon, conductive polymers, conductive glass, and Al-Cd alloys. To improve the adhesion, the conductivity, and the oxidation resistance, materials such as copper that have the surface thereof treated with materials such as carbon, nickel, titanium, and silver may also be used as the current collector for the negative electrode.

The current collector used for the positive electrode or the negative electrode may have the surface thereof subjected to oxidation treatment. In addition, the current collector may be foil-shaped, film-shaped, sheet-shaped, or net-shaped. The current collector may also be punched or expanded and may be used in a lath form, a porous form, a foam form, or another form. The thickness of the current collector may be, for example, but not particularly limited to, 1 $\mu$m or more and 100 $\mu$m or less.

The binder used in this embodiment may be, for example, but not particularly limited to, polyvinylidene fluoride (PVDF). Instead of PVDF, for example, binders such as PVDF copolymer resins, fluorocarbon resins, styrene-butadiene rubber (SBR), ethylene-propylene rubber (EPDM), and styreneacrylonitrile copolymers may also be used. As PVDF copolymer resins, for example, copolymer resins of PVDF with hexafluoropropylene (HFP), perfluoro(methyl vinyl ether) (PFMV), and tetrafluoroethylene (TFE) may be used. As fluorocarbon resins, for example, polytetrafluoroethylene (PTFE) and fluorocarbon rubber may be used. As other binders, for example, polysaccharides such as carboxymethylcellulose (CMC) and thermoplastic resins such as polyimide resins may be used. Two or more of the above binders may also be used in combination. The amount of binder added is preferably, but not particularly limited to, 1% by mass or more and 30% by mass or less, more preferably 2% by mass or more and 20% by mass or less, based on the amount of positive electrode active material or the amount of negative electrode active material.

There is no particular limitation on the method for manufacturing an electrode in this embodiment. An example of a method for manufacturing an electrode includes mixing materials such as an electrode active material, a conductor, and a binder in a dispersion medium to prepare an electrode material in slurry form, applying the electrode material to a current collector, and then volatilizing the dispersion medium.

A viscosity modifier may be used to prepare the above electrode material in slurry form. The viscosity modifier used may be, for example, but not particularly limited to, a water-soluble polymer. Examples of viscosity modifiers include celluloses such as carboxymethylcellulose, methylcellulose, ethylcellulose, hydroxymethylcellulose, hydroxypropylmethylcellulose, and hydroxyethylmethylcellulose; polycarboxylic acid compounds such as polyacrylic acid and sodium polyacrylate; compounds having a vinylpyrrolidone structure, such as polyvinylpyrrolidone; and polyacrylamide, polyethylene oxide, polyvinyl alcohol, sodium alginate, xanthan gum, carrageenan, guar gum, agar, and starch. Two or more of the above viscosity modifiers may also be used in combination. A preferred viscosity modifier is carboxymethylcellulose.

The lithium ion secondary battery according to this embodiment may include inorganic particles such as alumina and an insulating layer. The insulating layer can be formed, for example, by applying an inorganic solid electrolyte to the positive electrode or the negative electrode. Examples of inorganic solid electrolytes include, but not particularly limited to, $Li_{1+x}Ge_{2-y}Al_yP_3O_{12}$ (LAGP), $La_{2/3-x}Li_{3x}TiO_3$ (LLT), LICGC (registered trademark), and $Li_{1+x}Al_xTi_{2-x}(PO_4)_3$ (LATP).

The lithium ion secondary battery according to this embodiment may include a separator. Here, the separator is a member disposed between the positive electrode and the negative electrode and isolating the positive electrode from the negative electrode. For example, glass fibers may be used as the separator in this embodiment. The glass fibers in this embodiment may have a void fraction of 70% or more.

The lithium ion secondary battery according to this embodiment can be formed in the shape of a cylinder, a coin, a prism, or any other shape. The basic battery configuration is identical irrespective of the shape and can be implemented with design changes depending on the purpose. For example, a cylindrical battery is obtained by winding a negative electrode obtained by applying a negative electrode active material to a negative electrode current collector and a positive electrode obtained by applying a positive electrode active material to a positive electrode current collector, with a separator between the negative electrode and the positive electrode, placing the wound assembly in a battery can, pouring a nonaqueous liquid electrolyte, and sealing the battery can with insulating plates placed on the top and bottom thereof. A coin-shaped lithium ion secondary battery is obtained by placing a stack of a disk-shaped negative electrode, a separator, a disk-shaped positive electrode, and a stainless steel plate in a coin-shaped battery can, pouring a nonaqueous liquid electrolyte, and sealing the battery can.

B. Examples

The present invention will be more specifically described with reference to the following examples, although the present invention is not limited to the following examples.

<Example 1>

[Preparation of Positive Electrode]

A positive electrode coating material with a solid content of 60% by mass was obtained by mixing together 92 g of $LiNi_{1/3}Mn_{1/3}Co_{1/3}O_2$ as a positive electrode active material, 2 g of acetylene black (manufactured by Denka Company Limited, Li-400) and 4 g of KS6 (manufactured by Timcal) as conductors, 4 g of polyvinylidene fluoride (PVDF) (manufactured by Kureha Corporation) as a binder, and 67 g of N-methyl-2-pyrrolidone as a dispersion medium in a planetary mixer. This positive electrode coating material was applied to an aluminum foil (thickness: 15 $\mu$m), serving as a current collector, using an applicator, was dried at 130°C under reduced pressure, and was then subjected to roller pressing to obtain a positive electrode.

[Preparation of Negative Electrode]

A negative electrode coating material with a solid content of 40% by mass was obtained by mixing together 92 g of $Li_4Ti_5O_{12}$ as a negative electrode active material, 5 g of acetylene black (manufactured by Denka Company Limited, Li-400) as a conductor, 1.5 g of CMC (manufactured by DKS Co. Ltd.) as a thickener, 1.5 g (on a solid basis) of SBR (manufactured by JSR Corporation) as a binder, and 75 g of pure water as a dispersion medium in a planetary mixer. This negative electrode coating material was applied to an aluminum foil (thickness: 15 $\mu$m), serving as a current collector, using an applicator, was dried at 130°C under reduced pressure, and was then subjected to roller pressing to obtain a negative electrode.

[Preparation of Polymer Electrolyte]

A polymer electrolyte solution was prepared by mixing 56 parts by mass of lithium bis(fluorosulfonyl)imide (LiFSI) (manufactured by Kishida Chemical Co., Ltd., lithium battery grade (LBG)), which is a lithium salt, with 70 parts by mass of 1-ethyl-3-methylimidazolium bis(fluorosulfonyl)imide (EMImFSI) (manufactured by DKS Co. Ltd., ELEXCEL IL-110), which is an ionic liquid serving as a liquid electrolyte solvent, 30 parts by mass of a tetrafunctional polyether acrylate (manufactured by DKS Co. Ltd., ELEXCEL TA-210), which is a curing agent that forms a polymer, 0.9 parts by mass of 2,2'-azobis(2,4-dimethylvaleronitrile) (manufactured by FUJIFILM Wako Pure Chemical Corporation, V-65), which is an azo initiator, and 144 parts by mass of dimethoxyethane (manufactured by Kishida Chemical Co., Ltd., 1,2-dimethoxyethane) (DME), which is a diluting solvent. In Example 1, the polymer electrolyte solution was prepared such that the content of the lithium salt was 3.0 mol/kg based on the sum of the content of the ionic liquid and the content of the polymer.

A predetermined amount of the above polymer electrolyte solution was applied to the above positive electrode. After dimethoxyethane was removed at room temperature under vacuum conditions, the coating was heated at 80°C under vacuum conditions for 12 hours or more to obtain a positive electrode combined with a polymer electrolyte. The negative electrode was also subjected to a similar process to obtain a negative electrode combined with a polymer electrolyte.

After the above positive electrode and negative electrode were bonded together, a positive electrode terminal was attached to the positive electrode by ultrasonic welding, and a negative electrode terminal was attached to the negative electrode by ultrasonic welding. This element was placed in an aluminum-laminated package and was then heat-sealed therein. As a result, a lithium ion secondary battery with a positive electrode area of 10.2 [cm$^2$] and a negative electrode area of 9.0 [cm$^2$] was obtained.

As examples other than Example 1 and comparative examples, lithium ion secondary batteries were fabricated by the same procedure as in Example 1 except that the conditions shown in Table 1 described later were employed. The resulting lithium ion secondary batteries were evaluated as follows.

[Polymer Electrolyte Membrane-Forming Properties]

The electrolytes obtained in the examples and the comparative examples were evaluated for polymer electrolyte membrane-forming properties according to the following criteria. Comparative Example 4 was evaluated as "poor" for polymer electrolyte membrane-forming properties and was therefore not evaluated for the items other than membrane-forming properties.

Good: The membrane was self-standing, and its ionic conductivity was measurable by itself.

Poor: The membrane was not self-standing, and its ionic conductivity was not measurable by itself.

[Ionic Conductivity]

The thickness (membrane thickness) and cross-sectional area of each of the electrolyte membranes obtained in the examples and the comparative examples were measured. Each of the resulting polymer electrolytes was placed in a two-electrode cell, and the electrochemical impedance (EIS) was then measured at 25°C over a frequency range of 1 MHz to 0.1 Hz using an impedance analyzer (product name: SP-150) manufactured by Bio-Logic SAS to obtain a bulk resistance value. The resulting resistance value and the following equation were used to obtain the ionic conductivity ($\sigma$) of the electrolyte membrane.

$$\sigma = l/(s \cdot R)$$

(where l represents the thickness (cm) of the electrolyte membrane, s represents the cross-sectional area (cm$^2$), and R represents the bulk resistance value ($\Omega$).)

[Charge/Discharge Test on Lithium Ion Secondary Battery]

As a capacity check test, each of the resulting lithium ion secondary batteries was subjected to constant-current (CC) charging at the 0.05C current value and then to CC discharging at the 0.05C current value. Charging and discharging were each performed for about 20 hours. The voltage range of charging and discharging was set to a range of 1.7 V to 2.8 V. "0.05C current value" refers to a current value that is 0.05 times the 1C current value, at which the cell capacity can be discharged in one hour.

As a discharge characteristic test, each of the resulting lithium ion secondary batteries was subjected to CC charging at the 0.05C current value and then to CC discharging at the 1C current value, and the specific capacity [mAh/g] and the capacity retention were calculated. The voltage range of charging and discharging was set to a range of 1.7 V to 2.8 V. The discharge capacity retention [%] is the ratio of the 1C discharge capacity to the 0.05C discharge capacity obtained in the capacity check test (1C discharge capacity/0.05C discharge capacity).

As a charge characteristic test, each of the resulting lithium ion secondary batteries was subjected to CC discharging at the 0.05C current value and then to CC charging at the 1C current value, and the specific capacity [mAh/g] and the capacity retention were calculated. The voltage range of charging and discharging was set to a range of 1.7 V to 2.8 V. The charge capacity retention [%] is the ratio of the 1C charge capacity to the 0.05C charge capacity obtained in the capacity check test (1C charge capacity/0.05C charge capacity).

The results are shown in Table 1 below.

[Table 1]

Table 1

| Composition and results | | Composition and amounts added [parts by mass] | | | | | | | |
|---|---|---|---|---|---|---|---|---|---|
| | | Example 1 | Example 2 | Example 3 | Comparative Example 1 | Comparative Example 2 | Comparative Example 3 | Comparative Example 4 | Comparative Example 5 |
| Lithium salt content [mol/kg] | | 3.0 | 2.5 | 5.0 | 1.0 | 1.6 | 10.0 | 1.6 | 1.0 |
| Liquid electrolyte | Lithium salt | LiFSI | LiFSI | LiFSI | LiFSI | LiFSI | LiFSI | LiFSI | LiFSI |
| | | 56 | 46.7 | 93.5 | 20 | 30 | 187 | 30 | 20 |
| | Ionic liquid | EMImFSI | EMImFSI | EMImFSI | EMImFSI | EMImFSI | EMImFSI | EMImFSI | EMImFSI |
| | | 70 | 70 | 70 | 70 | 70 | 70 | 80 | 60 |
| Polymer | | TA-210 | TA-210 | TA-210 | TA-210 | TA-210 | TA-210 | TA-210 | TA-210 |
| | | 30 | 30 | 30 | 30 | 30 | 30 | 20 | 40 |
| Initiator | | V-65 | V-65 | V-65 | V-65 | V-65 | V-65 | V-65 | V-65 |
| | | 0.9 | 0.9 | 0.9 | 0.9 | 0.9 | 0.9 | 0.9 | 0.9 |
| Diluting solvent | | DME | DME | DME | DME | DME | DME | DME | DME |
| | | 144 | 136 | 178 | 120 | 120 | 264 | 120 | 120 |
| Polymer electrolyte membrane-forming properties | | Good | Good | Good | Good | Good | Good | Poor | Good |
| Ionic conductivity of polymer electrolyte membrane [mS/cm (25°C)] | | 0.4 | 0.3 | 0.4 | 0.2 | 0.2 | 0.2 | - | 0.1 |
| 1C discharge characteristics | Specific capacity [mAh/g] | 116 | 112 | 103 | 23 | 45 | 53 | - | 15 |
| | Capacity retention [%] | 80 | 77 | 75 | 20 | 32 | 57 | - | 18 |

| Composition and results | | Composition and amounts added [parts by mass] | | | | | | | |
|---|---|---|---|---|---|---|---|---|---|
| | | Example 1 | Example 2 | Example 3 | Comparative Example 1 | Comparative Example 2 | Comparative Example 3 | Comparative Example 4 | Comparative Example 5 |
| 1C charge characteristics | Specific capacity [mAh/g] | 141 | 139 | 121 | 30 | 60 | 61 | - | 17 |
| | Capacity retention [%] | 97 | 96 | 92 | 25 | 41 | 60 | - | 20 |

The following was found from Table 1. Specifically, it was found that Examples 1 to 3, which satisfied all of (i) to (iii) below, had superior ionic conductivity and superior electrical characteristics as compared to Comparative Examples 1 to 5, which did not satisfy at least one of (i) to (iii) below. For example, it was found that Example 1 had a lithium ion conductivity that was about twice that of Comparative Example 2, a discharge capacity retention that was about 2.7 times that of Comparative Example 2, and a charge capacity retention that was about 2.4 times that of Comparative Example 2.

(i) An ionic liquid containing a bis(fluorosulfonyl)imide anion as an anion component is used.
(ii) The content of the lithium salt is 2 mol/kg or more and 6 mol/kg or less based on the sum of the content of the ionic liquid and the content of the polymer.
(iii) The content of the polymer is 25% by mass or more and 40% by mass or less based on the sum of the content of the ionic liquid and the content of the polymer.

Here, "superior electrical characteristics" refers to having both superior 1C discharge characteristics and superior 1C charge characteristics. "Superior 1C discharge characteristics" refers to having both high specific capacity and high retention at the 1C current value. Similarly, "superior 1C charge characteristics" refers to having both high specific capacity and high retention at the 1C current value.

By comparing Examples 1 to 3, it was found that Examples 1 and 2, in which the content of the lithium salt was 2 mol/kg or more and 4 mol/kg or less based on the sum of the content of the ionic liquid and the content of the polymer, had even superior electrical characteristics as compared to Example 3, in which the content of the lithium salt did not fall within the above range. In particular, it was found that Examples 1 and 2 had superior specific capacity during 1C discharging as compared to Example 3.

Industrial Applicability

The lithium ion secondary battery according to this embodiment has high strength, superior ionic conductivity, and superior electrical characteristics. Thus, the lithium ion secondary battery according to this embodiment can be used as a power supply for mobile devices and is also useful for applications such as wearable devices, electric tools, electric bicycles, electric wheelchairs, robots, electric cars, emergency power supplies, and large-capacity stationary power supplies.

The present invention is not limited to the above embodiment, but can be implemented in various configurations without departing from the spirit thereof. For example, the technical features in the embodiment and examples corresponding to the technical features in the aspects described in the "Summary of Invention" section can be replaced or combined as appropriate to solve part or all of the above problem or to achieve part or all of the above advantage. The technical features can also be eliminated as appropriate unless they are described as being essential in the present specification.

**Claims**

1. A lithium ion secondary battery comprising a positive electrode, a negative electrode, and a polymer electrolyte,

wherein the polymer electrolyte contains a lithium salt, an ionic liquid, and a polymer,
the ionic liquid contains a bis(fluorosulfonyl)imide anion as an anion component,
a content of the lithium salt is 2 mol/kg or more and 6 mol/kg or less based on a sum of a content of the ionic liquid and a content of the polymer, and
the content of the polymer is 25% by mass or more and 40% by mass or less based on the sum of the content of the ionic liquid and the content of the polymer.

2. The lithium ion secondary battery according to Claim 1, wherein the content of the lithium salt is 2 mol/kg or more and 4 mol/kg or less based on the sum of the content of the ionic liquid and the content of the polymer.

3. The lithium ion secondary battery according to Claim 1 or 2, wherein the polymer contains a difunctional or higher-valent polyether acrylate.

## INTERNATIONAL SEARCH REPORT

| International application No. |
| --- |
| PCT/JP2021/009307 |

A. CLASSIFICATION OF SUBJECT MATTER
Int. Cl. H01M10/052(2010.01)i, H01M10/0565(2010.01)i
FI: H01M10/0565, H01M10/052

According to International Patent Classification (IPC) or to both national classification and IPC

B. FIELDS SEARCHED

Minimum documentation searched (classification system followed by classification symbols)
Int. Cl. H01M10/052, H01M10/0565

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2010-80404 A (SUMITOMO BAKELITE CO., LTD.) 08 | 1-2 |
| Y | April 2010, claims, paragraph [0010], examples | 3 |
| Y | JP 2019-521475 A (LG CHEM, LTD.) 25 July 2019, claims, paragraph [0039], examples | 3 |
| Y | JP 2020-35587 A (JIKU KAGAKU KK) 05 March 2020, claims, paragraph [0025], examples | 3 |
| X | WO 2018/220800 A1 (HITACHI CHEMICAL CO., LTD.) 06 December 2018, claims, paragraphs [0063], [0084], examples | 1-2 |

☒  Further documents are listed in the continuation of Box C.          ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07.05.2021 | 18.05.2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
|---|
| PCT/JP2021/009307 |

C (Continuation). DOCUMENTS CONSIDERED TO BE RELEVANT

| Category* | Citation of document, with indication, where appropriate, of the relevant passages | Relevant to claim No. |
|---|---|---|
| X | WO 2018/192556 A1 (HITACHI CHEMICAL CO., LTD.) 25 October 2018, page 151, lines 15-25, page 17, lines 17-25, page 18, lines 1-10, examples, Claims | 1-2 |
| X | JP 2019-129119 A (HITACHI CHEMICAL CO., LTD.) 01 August 2019, examples | 1-2 |

Form PCT/ISA/210 (continuation of second sheet) (January 2015)

International application No.

PCT/JP2021/009307

| Patent Documents referred to in the Report | Publication Date | Patent Family | Publication Date |
|---|---|---|---|
| JP 2010-80404 A | 08.04.2010 | (Family: none) | |
| JP 2019-521475 A | 25.07.2019 | EP 3457486 A<br>paragraph [0036],<br>examples, claims<br>KR 10-2018-0138134 A<br>CN 109565078 A<br>WO 2018/236064 A1 | |
| JP 2020-35587 A | 05.03.2020 | (Family: none) | |
| WO 2018/220800 A1 | 06.12.2018 | EP 3637522 A<br>paragraphs [0070],<br>[0071], [0105],<br>examples, claims<br>CN 108735972 A<br>TW 201904121 A<br>CN 110710044 A<br>KR 10-2020-0014332 A | |
| WO 2018/192556 A1 | 25.10.2018 | JP 2020-518091 A<br>claims, paragraphs<br>[0071], [0080],<br>[0083], examples<br>WO 2018/191959 A1<br>CN 110537285 A | |
| JP 2019-129119 A | 01.08.2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019057425 A